# EUROPÄISCHE PATENTANMELDUNG

(11) **EP 4 693 775 A1**
(43) Veröffentlichungstag der Anmeldung: **11.02.2026**
(21) Anmeldenummer: 25194254.6
(22) Anmeldetag: 06.08.2025
(51) Int. Cl.: H02B 1/30, H02B 1/50

(54) **MODULARER EINGRABSOCKEL UND MODULARER VERTEILERKASTEN**

(30) Priorität: 07.08.2024 DE 102024122555; 07.08.2024 DE 202024104459 U
(71) Anmelder: Rapp, Thorsten, 75236 Kämpfelbach (DE)
(72) Erfinder: Rapp, Thorsten, 75236 Kämpfelbach (DE)
(74) Vertreter: Patentanwälte und Rechtsanwalt Weiß, Arat & Partner mbB

(57) **Zusammenfassung**

Ein modularer Verteilerkasten mit Eingrabsockel, wobei :
- andernends der ersten Stirnplatte (1) die erste Vorderfestblende (3) und die erste Rückwand (2) und eine erste Bodenstrebe (5) mit einen Modular-Rahmen (6) verbunden sind,
- wobei der Modular-Rahmen (6) in der Erstreckung der ersten Vorderfestblende (3) eine zweite Vorderfestblende (7, 7.1) aufweist und in der Erstreckung der ersten Rückwand (2) eine zweite Rückwand (8, 8.1) aufweist und in der Erstreckung der ersten Bodenstrebe (5) eine zweite Bodenstrebe (9, 9.1) aufweist,
- wobei die zweite Rückwand (8, 8.1) und die zweite Vorderfestblende (7, 7.1) und die zweite Bodenstrebe (9, 9.1) andererseits des Modular-Rahmens (6) mit einem weiteren Modular-Rahmen (10) oder der zweiten Stirnplatte (4) verbunden ist,
- wobei eine Höhe der Vorderfestblenden (3, 7, 7.1) geringer ist, als eine Höhe der Rückwände (2, 8, 8.1),
- wobei in einem Einbauzustand ein erster Leerraumabstand der Rückwände (2, 8, 8.1) zu der Bodenstrebe (5, 9, 9.1) identisch ist, wie ein zweiter Leerraumabstand der Vorderfestblenden (3, 7, 7.1) zu der Bodenstrebe (5, 9, 9.1),
- wobei zwischen der ersten Vorderfestblende (3) und dem Deckelelement eine erste Öffnungsblende (11) angeordnet ist und zwischen der zweiten Vorderfestblende (7, 7.1) und dem Deckelelement eine zweite Öffnungsblende (12, 12.1) angeordnet ist.

## Beschreibung

### Technisches Gebiet

Die Erfindung betrifft einen modularen Eingrabsockel nach dem Oberbegriff des Anspruchs 1 sowie ein modularer Verteilerkasten nach dem Oberbegriff des Anspruchs 9.

### Stand der Technik

Derartige modulare Verteilerkästen sind bereits in vielfältiger Form und Ausgestaltung bekannt und gebräuchlich. So wird beispielsweise in der DE 7 324 466 U ein Fußboden-Anschluß- und Verteilerkasten offenbart. Dieser besteht aus einem Gehäuse aus Kunststoff und elektrischen Anschlußelementen, wie Steckdosen, im Gehäuse, die mittels einer Abdeckplatte abgedeckt sind, dadurch gekennzeichnet, daß das Gehäuse derart zumindest mit dem der Gehäusebodenwand benachbarten Teil als verlorene Schalung für Betonfußböden bzw. -decken ausgebildet ist, daß es in Kastenlängs- und/oder -querrichtung verlaufende, nach außen vorspringende Versteifungsrippen und am Rand einen umlaufenden, nach außen gerichteten Flansch aufweist, der zur Auflage der Abdeckplatte dient und von dessen äußerem Ende ein Rand hochsteht.

### Aufgabe der Erfindung

Die Aufgabe der vorliegenden Erfindung ist es, die Nachteile aus dem Stand der Technik zu überwinden. Insbesondere soll ein Verteilerkasten mit Eingrabsockel bereitgestellt werden, der beliebig und einfach an die Erfordernisse vor Ort angepasst werden kann und beim Aufbau und Einbau alle notwendigen Merkmale aufweist, sodass der Nutzer je nach Bedarf einen größeren Verteilerkasten oder einen kleineren Verteilerkasten zur Verfügung stellt.

### Lösung der Aufgabe

Zur Lösung der Aufgabe führen die Merkmale nach dem Anspruch 1 sowie des Anspruchs 9.

Vorteilhafte Ausgestaltungen sind in den Unteransprüchen beschrieben.

Die Erfindung betrifft einen modularen Verteilerkasten mit Eingrabsockel. Dabei werden zwischen eine erste Stirnplatte und eine zweite Stirnplatte eine beliebige Anzahl von Rückwänden und Vorderfestblenden angeordnet, wobei eine beliebige Anzahl von Modular-Rahmen zwischen der ersten und der zweiten Stirnplatte angeordnet werden können. Die Modular-Rahmen verbinden dabei beispielsweise eine erste Rückwand mit einer zweiten Rückwand. Die beiden Rückwände wiederum erstrecken sich beispielsweise zu den Stirnwänden oder einem weiteren Modular-Rahmen.

In gleicher Weise verbinden die Modular-Rahmen auch eine erste Vorderfestblende mit einer zweiten Vorderfestblende. Auf diese Weise kann ein Nutzer die Länge des modularen Verteilerkastens in der Praxis an die gewünschte Erstreckung anpassen. Dabei können auch unterschiedlich lang gestaltete Vorderfestblenden und Rückwände zum Einsatz kommen. Dies erhöht zusätzlich die Flexibilität des Nutzers.

Weiterhin werden in einem bevorzugten Ausführungsbeispiel je zwei Bodenstreben zwischen einer der Stirnwände und dem Modular-Rahmen angeordnet. Das bedeutet, dass von dem Modular-Rahmen im unteren Bereich von einer Ecke des Modular-Rahmens zu einer Ecke der jeweiligen Stirnplatte je eine Bodenstrebe verläuft. Dies kann ähnlich wie bei den Rückwänden in zwei Richtungen erfolgen, so dass ein Modular-Rahmen, welcher zwischen zwei Stirnplatten angeordnet ist, jeweils über die Bodenstreben mit den zwei Stirnplatten verbunden ist. Bei den Bodenstreben handelt es sich um sogenannte verlorene Bodenstreben, die im späteren Einbauzustand von Beton übergossen werden sollen.

Der Modular-Rahmen ordnet dabei die erste Vorderfestblende in der Erstreckung der zweiten Vorderfestblende und die erste Rückwand in der Erstreckung der zweiten Rückwand. Ebenso werden auch die ersten Bodenstrebe in der Erstreckung der zweiten Bodenstrebe angeordnet. In der Erstreckung bedeutet dabei, dass sich die beiden angesprochenen Bauteile in einer Geraden bündig mit dem Modular-Rahmen befinden.

Eine Höhe der Vorderfestblenden ist geringer, als eine Höhe der Rückwände. Höhe bedeutet dabei die Erstreckung von der Bodenstrebe weg in Richtung eines Deckelelementes oder eines auf den Eingrabsockel aufgebrachten Verteilerkastens. Anstatt des Deckelelementes kann auch ein Verteilerkasten auf den Eingrabsockel aufgebracht und befestigt werden. Auf diese Weise würde der aufgesetzte Verteilerkasten mit seinem eigenen Deckelement den Eingrabsockel verschliessen. Dabei bilden die Vorderfestblenden mit den Rückwänden einen gleichen Leerraumabstand zu den Bodenstreben aus, so dass die Rückwände bündig mit dem Modular-Rahmen und/oder den Stirnplatten abschließen. Auf diese Weise entsteht oberhalb der Vorderfestblenden ein Freiraum. Dieser Freiraum wird zunächst mittels eines Anschlagstegs begrenzt. Der Anschlagsteg ist zwischen den Stirnwänden und dem Modular-Rahmen und bündig mit dem Modular-Rahmen und den Stirnplatten angeordnet. Der Bereich zwischen dem Anschlagsteg und der Vorderfestblenden wird mittels einer Öffnungsblende reversibel verschlossen. Reversibel verschlossen bedeutet, dass der Nutzer sie mit einem Schlüssel oder einem passenden Werkzeug oder auch nur manuell für Arbeiten öffnen und schliessen kann. Die Öffnungsblenden sind in eine Aufnahme reversibel einhängbar, so dass ein Auf- und Zuklappen der Öffnungsblenden möglich ist.

Die Rückwände weisen jeweils eine Kabelfangschiene auf. Der Modular-Rahmen wiederum weist einen Haltebügel auf, an welchem die Kabelfangschienen der ersten Rückwand und der zweiten Rückwand angebracht und somit miteinander verbunden werden können.

Zwischen den Rückwänden und den Vorderfestblenden ist ein Abstands-Stabilisierer angeordnet. Der Abstands-Stabilisierer verbindet dabei die Rückwand mit der zugehörigen Vorderfestblende und verhindert ein späteres Verbiegen der Bauteile während des Einbaus, wenn in den Eingrabsockel in Form der Leerraumabstände Beton gegossen wird. Die Verbindung des Abstands-Stabilisierers mit den Rückwänden und den Vorderfestblenden, kann mittels Klemmen oder Verschrauben erfolgen.

Beim Aufbau des modularen Verteilerkastens sind die Rückwände und die Vorderfestblenden durch Rastnasen vorjustierbar. Dabei werden die Rastnasen der Rückwände und der Vorderfestblenden in entsprechende Schlitze oder Öffnungen des Modular-Rahmens oder der Stirnplatten eingehängt und eingeklemmt, um sie anschliessend mittels Schrauben zu verbinden.

In einem bevorzugten Ausführungsbeispiel beträgt die Höhe der Stirnplatten und des Modular-Rahmens 1,00 m, wobei die Höhe der Rückwände 0,6 m beträgt und die Höhe der Vorderfestblenden und der Öffnungsblenden jeweils 0,3 m beträgt, sodass die Leerraumabstände 0,4 m betragen.

Die Eingrabtiefe für den modularen Verteilerkasten beträgt 0,7 m. Folglich ist der Leerraumabstand und auch die Vorderfestblenden sowie die halbe Höhe der Rückwände im Einbauzustand in Beton eingegossen.

Die erste Rückwand und die erste Vorderfestblende weisen eine identische Länge aufweisen, und die zweite Rückwand und die zweite Vorderfestblende weisen ebenfalls eine identische Länge auf. Solange die jeweilige Rückwand und die dazugehörige Vorderfestblende identische Längen aufweisen, ist es dem Nutzer möglich, auch unterschiedlich lange Abschnitte mittels des Modular-Rahmens in der Gesamtkonstruktion des modularen Verteilerkastens vorzusehen.

Beim erfindungsgemässen Ein- und Aufbau des modularen Verteilerkastens sind folgende Schritte zu beachten:
- Verbinden der ersten Stirnwand mit der ersten Rückwand;
- Verbinden der zweiten Rückwand mit dem ersten Modular-Rahmen;
- Anbringen der ersten Vorderfestblende zwischen der ersten Stirnwand und dem ersten Modular-Rahmen;
- Anbringen der zweiten Rückwand und der zweiten Vorderfestblende an dem ersten Modular-Rahmen;
- Anbringen der zweiten Stirnwand an der zweiten Vorderfestblende und der zweiten Rückwand;
- Anbringen der Bodenstreben sowie der Anschlag-Stege;
- Einsetzen des modularen Verteilerkastens in eine Baugrube;
- Auffüllen der Baugrube bis zu den Vorderfestblenden und der Rückwände mit Beton;
- Einsetzen der Öffnungsblenden oberhalb der Vorderfestblenden;
- Aufsetzen des Deckelelementes.

In einer nebengeordneten Erfindung ist ein modularer Verteilerkasten beansprucht, welcher in erster Linie aus einem Bodenprofil, einem Rückwandprofil, einem Frontwandprofil und einer ersten Endwandung und einer zweiten Endwandung besteht, sodass eine auf der oberen Seite offene Quaderform entsteht.

Erfindungsgemäß ist zwischen die erste Endwandung und die zweite Endwandung ein Erweiterungsmodul anordenbar, wobei das Erweiterungsmodul zwischen das eine Bodenprofil, das eine Frontwandprofil das eine Rückwandprofil einerseits und andererseits an eine der Endwandungen anordenbar.

Die beiden Endwandungen oder zumindest eine der Endwandungen ist mit dem Erweiterungsmodul über Verbindungsstreben verbindbar. Dies schafft eine zusätzliche Stabilisierung und Vereinfacht das Zusammensetzen der Gesamtkonstruktion.

In einem weiteren Ausführungsbeispiel ist das Erweiterungsmodul zwischen zwei Bodenprofile und zwei Rückwandprofile und zwei Frontwandprofile anordenbar. Dabei weist das Erweiterungsmodul einerseits und andererseits jeweils eines der Rückwandprofile, Frontwandprofile und Bodenprofile auf. Dies ist mittels weiterer Erweiterungsmodule und Rückwandprofile, Bodenprofile und Frontprofile beliebig modular erweiterbar.

Das Erweiterungsmodul weist einen Bodenstreifen, einen Deckelstreifen und zwei Seitenstreifen auf.

An dem Rückwandprofil ist an einer Aussenfläche eine Aufhängvorrichtung und an einer Innenfläche Kabelführungselemente und Sicherungshalter anordenbar. Die Aufhängvorrichtung dient der möglichen hängenden Anbringung des Verteilerkastens an eine Wand eines Aufstellungsorts.

Das Frontwandprofil ist entweder selbst als eine öffnebare Klappe ausgeführt oder umfasst die öffnebare Klappe. Dadurch wir dem Nutzer der Zugang zu dem Innenraum des modularen Verteilerkastens für beispielsweise Installations- oder Wartungsarbeiten ermöglicht.

Es kann auf den modularen Verteilerkasten optional ein Deckelprofil oder ein weiterer modularer Verteilerkasten andererseits des Bodenprofils anordnebar ist. Dadurch ist eine weitere Erweiterung weg vom Bodenprofil des untersten, also dem Untergrund zugewandten modularen Verteilerkastens möglich.

Eine erfindungsgemäße Verwendung des modularen Verteilerkastens weist folgende Schritte:
- Vorkonfektionierung des Verteilerkastens durch Festlegung der Anzahl und Maße des Bodenprofils, des Rückwandprofils, des Frontwandprofils, der ersten Endwandung, der zweiten Endwandung und des Erweiterungsmoduls und Verbindungsstreben an einem Herstellungsort,
- Versenden oder Verbringen des vorkonfektionierten Verteilerkastens an einen Aufstellungsort;
- Aufbau des modularen Verteilerkastens an dem Aufstellungsort;
- Inbetriebnahme des modularen Verteilerkastens an dem Aufstellungsort.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine perspektivische Ansicht eines modularen Eingrabsockels P gemäss der vorliegenden Erfindung;
- Figur 2: eine perspektivische Ansicht eines Modul-Rahmens des modularen Eingrabsockels P nach Figur 1; und
- Figur 3: eine Vorderansicht des modularen Eingrabsockels P nach Figur 1,
- Figur 4: eine perspektivische Ansicht eines modularen Verteilerkastens Q gemäss der vorliegenden Erfindung;
- Figur 5: eine perspektivische Ansicht eines erfindungsgemässen Erweiterungsmoduls 36;
- Figur 6: eine Ansicht von oben auf den modularen Verteilerkasten Q nach der Figur 4.

### Ausführungsbeispiele

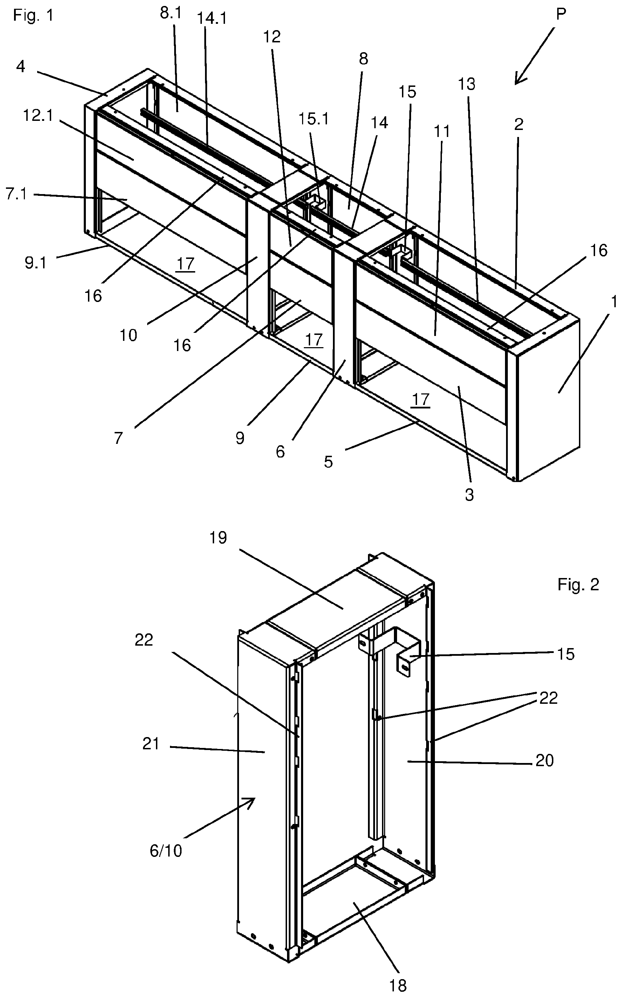

In Figur 1 ist eine perspektivische Ansicht eins modularen Verteilerkastens P mit Eingrabsockel gemäss der vorliegenden Erfindung dargestellt. Der modulare Verteilerkasten P besteht aus einer ersten Stirnplatte 1, wobei die erste Stirnplatte 1 eine erste Rückwand 2 und eine erste Vorderfestblende 3 aufweist, wobei die erste Rückwand 2 und die erste Vorderfestblende 3 einends mit der ersten Stirnplatte 1 verbunden sind, wobei eine zweite Stirnplatte 4 und ein nicht näher gezeigtes Deckelelement oder ein Verteilerkasten mit eigenem Deckel vorhanden sind.

Andernends der ersten Stirnplatte 1 ist die erste Vorderfestblende 3 und die erste Rückwand 2 sowie eine erste Bodenstrebe 5 mit einem Modular-Rahmen 6 verbunden. Der Modular-Rahmen 6 weist in der Erstreckung der ersten Vorderfestblende 3 eine zweite Vorderfestblende 7 auf und in der Erstreckung der ersten Rückwand 2 eine zweite Rückwand 8. In der Erstreckung der ersten Bodenstrebe 5 ist eine zweite Bodenstrebe 9 vorhanden. Ist ein zweiter oder weiterer Modular-Rahmen 10 vorgesehen, wie er in Figur 1 gezeigt ist, so ist eine weitere zweite Rückwand 8.1 sowie eine weitere zweite Vorderfestblende 7.1 und eine weitere zweite Bodenstrebe 9.1 vorhanden, welche die Verbindung zu der zweiten Stirnplatte 4 herstellen. Auch unterhalb der Rückwände 2, 8, 8.1 sind Bodenstreben 5, 9, 9.1 angeordnet, wobei sie in der Figur 1 nicht sichtbar sind.

Weiter weisen die Rückwände 2, 8, 8.1 jeweils eine Kabelfangschiene 13, 14, 14.1 auf. Der Modular-Rahmen 6, 10 weist wiederum einen Haltebügel 15, 15.1 auf, an welchen Kabelfangschienen 13, 14, 14.1 der ersten Rückwand 2 und der zweiten Rückwand 8, 8.1 angebracht und somit miteinander funktionell verbunden werden können.

Zwischen der ersten Vorderfestblende 3 und dem Deckelelement oder dem aufsetzbaren Verteilerkasten ist eine erste Öffnungsblende 11 angeordnet und zwischen der zweiten Vorderfestblende 7, 7.1 und dem Deckelelement oder dem aufgesetzten Verteilerkasten ist jeweils eine zweite Öffnungsblende 12, 12.1 angeordnet,

Zwischen der jeweiligen Bodenstrebe 5, 9, 9.1 und der dazugehörigen Rückwand 2, 8, 8.1 und der dazugehörigen Vorderfestblenden 3, 7, 7.1 bildet sich ein Leerraumabstand 17, welcher später im Einbauzustand mit Beton ausgefüllt wird. Der Leerraumabstand 17 der Rückwände 2, 8, 8.1 zu den Bodenstreben 5, 9, 9.1 ist identisch, wie der Leerraumabstand 17 der Vorderfestblenden 3, 7, 7.1 zu der Bodenstrebe 5, 9, 9.1. Leerraumabstand bedeutet hier eine Höhe des Bereichs, der später mit Beton ausgegossen wird und damit verloren geht. Die Bodenstreben 5, 9, 9.1 befinden sich jeweils eckseitig in einem unteren Bereich der ersten Stirnplatte 1 und in den zugeordneten Eckbereich der Modular-Rahmen 6, 10 und sie erstrecken sich von den Modular-Rahmen 6, 10 zu der zweiten Stirnplatte 4 ebenfalls in dem jeweilig zugeordneten Eckbereich, so dass sie die untere Eckkante einer Quaderform bilden.

Die Figur 2 zeigt eine perspektivische und vergrösserte Darstellung des Modular-Rahmens 6, 10, welcher in Seitenansicht ein Rechteck darstellt. Der Modular-Rahmen 6, 10 weist ein Bodenblech 18, ein Oberblech 19, ein Rückblech 20 sowie ein Vorderblech 21 auf. Dabei weisen das Rückblech 20 und das Vorderblech 21 eine gleiche Länge auf und beabstanden damit das Bodenblech 18 zu dem Oberblech 19. Entlang des Vorderblechs 21 und des Rückblechs 20 sind Anbringwinkel 22 vorgesehen, die wiederum Einhaköffnungen für Rastnasen oder Befestigungslöcher für Verschraubungen zeigen.

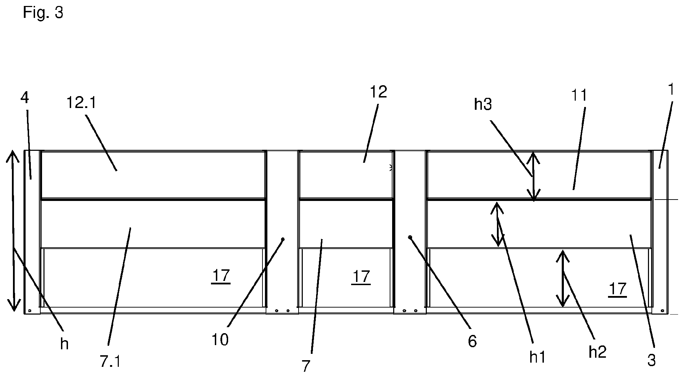

Figur 3 zeigt eine Vorderansicht, aus der gut zu erkennen ist, dass eine Höhe h der Stirnplatten 1, 4 und der Modular-Rahmen 6, 10 identisch sind und in einem bevorzugten Ausführungsbeispiel 1,00 m beträgt. Die Höhe h1 der Vorderfestblenden 3, 7, 7.1 beträgt 0,3 m, die Höhe h3 der Öffnungsblenden 11, 12, 12.1 beträgt 0,6 m, was auch gleichzeitig die Höhe der Rückwände 2, 8, 8.1 darstellt. Folglich beträgt die Höhe h2 der Leerraumabstände 17 0,4 m. Eine Höhe h1 der Vorderfestblenden 3, 7, 7.1 ist folglich geringer, als eine Höhe der Rückwände 2, 8, 8.1.

Die Eingrabtiefe für den modularen Verteilerkasten P beträgt 0,7 m. Folglich ist der Leerraumabstand 17 und auch die Vorderfestblenden 3, 7, 7.1 sowie die halbe Höhe der Rückwände 2, 8, 8.1 im Einbauzustand in Beton eingegossen.

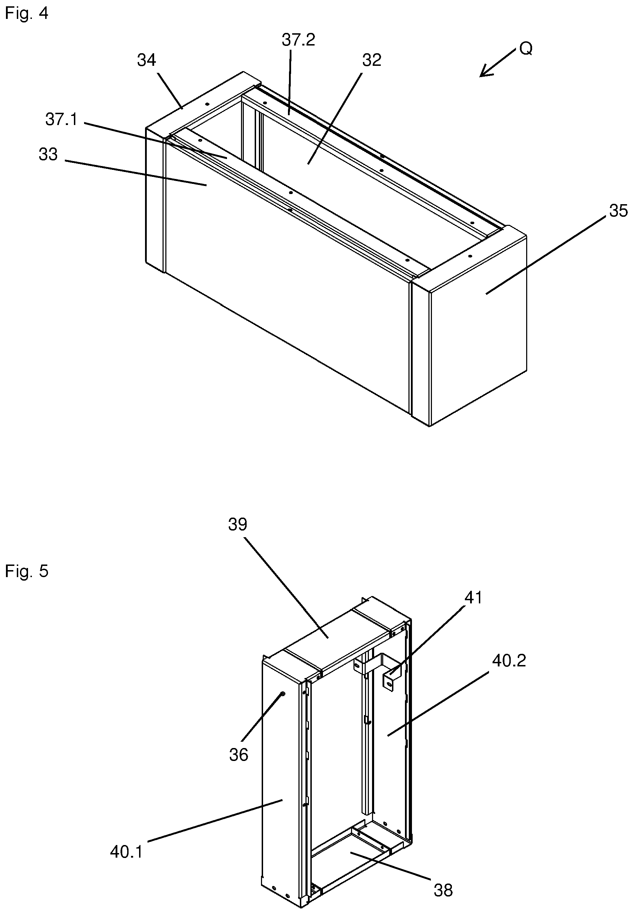

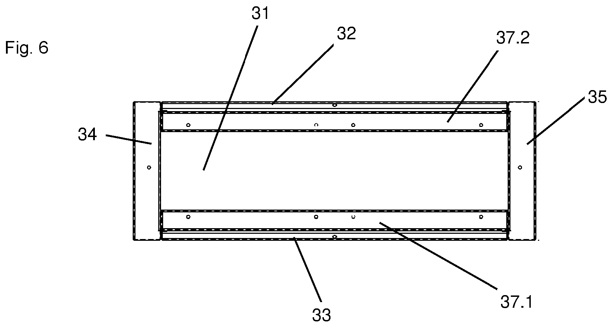

In der Figur 4 ist eine perspektivische Ansicht auf einen modularen Verteilerkasten Q gezeigt. Der Verteilerkasten Q besteh aus einem Bodenprofil 31, einem Rückwandprofil 32, einem Frontwandprofil 33, einer ersten Endwandung 34 und einer zweiten Endwandung 35. Diese Bauteile bilden zusammengebaut einen Quader, wobei die dem Bodenprofil 31 gegenüberliegende Seite des Quaders ist in der Figur 6 offen ausgeführt. Die Erstellung der verschiedenen modularen Möglichkeit geschieht im Rahmen einer Vorkonfektionierung an einem Herstellungsort.

Auf diese offene Fläche kann entweder ein Deckelprofil oder ein weiterer modularer Verteilerkasten aufgesetzt und verbunden werden.

In der Figur 5 ist ein Erweiterungsmodul 36 gezeigt. Das Erweiterungsmodul 36 ist ein Rechteck aus einem Bodenstreifen 38, einem Deckelstreifen 39 und zwei Seitenstreifen 40.1, 40.2 aufweist. Die zwei Seitenstreifen 40.1, 40.2, der Bodenstreifen 38 und der Deckelstreifen 39 entsprechen in ihren Maßen im Wesentlichen den Maßen der Endwandungen 34, 35.

Erfindungsgemäß ist das Erweiterungsmodul 36 zwischen die erste Endwandung 34 und die zweite Endwandung 35 anordenbar. Dabei kann es beispielsweise derart gestaltet sein, dass das Erweiterungsmodul 36 direkt zwischen beiden Endwandungen 34, 35 anordnebar ist.

Das Erweiterungsmodul 36 kann in einem anderen Ausführungsbeispiel auch zwischen zwei Bodenprofile 31 und zwei Rückwandprofile 32 und zwei Frontwandprofile 33 anordenbar. Je eine der Bodenprofile 31, der Rückwandprofile 32, der Frontwandprofile 33 können andererseits des zwischen ihnen angeordneten Erweiterungsmoduls 36 entweder je ein weiteres Erweiterungsmodul oder eine der beiden Endwandungen 34, 35 anordnebar sein. Dadurch kann beispielsweise das Erweiterungsmodul 36 beispielsweise nur zu einer möglichst großen Verlängerung des Frontwandprofils 33, des Rückwandprofils 32 und des Bodenprofils 31 eingesetzt werden.

In einem weiteren erfindungsgemäßen Ausführungsbeispiel kann das Erweiterungsmodul 36 zwischen das eine Bodenprofil 31 und das eine Frontwandprofil 33 und das eine Rückwandprofil 32 und eine der Endwandungen 34, 35 anordenbar sein. Dadurch kann beispielsweise das Erweiterungsmodul 36 beispielsweise nur zu einer geringfügigen Verlängerung des Frontwandprofils 33, des Rückwandprofils 32 und des Frontwandprofils 33 eingesetzt werden.

Zumindest eine der Endwandungen 34, 35 ist mit dem Erweiterungsmodul 36 über Verbindungsstreben 37.1, 37.2 verbindbar. Die Verbindungsstreben 37.1, 37.2 dienen der Stabilisierung der Gesamtkonstruktion und können auch zur Anbringung des Frontwandprofils 33, des Rückwandprofils 32 und des Bodenprofils 31 zur Erstellung des Quaders eingesetzt werden. Die Anzahl und Form der Verbindungsstreben 37.1, 37.2 richtet sich nach der Vorkonfektionierung am Herstellungsort.

Die Verbindungsstreben 37.1, 37.2 sind in dem hier gezeigten Ausführungsbeispiel an den Längskanten des offenen Bereichs des Quaders angeordnet. Im Unteren Bereich können zusätzliche Verbindungsstreben vorgesehen sein, die ebenfalls entlang der Längskanten eines Bodenbereichs des Quaders angeordnet sind.

An dem Rückwandprofil 32 ist an einer Aussenfläche eine nicht gezeigte Aufhängvorrichtung und an einer Innenfläche sind nicht gezeigte Kabelführungselemente und Sicherungshalter anordenbar. Aussenfläche ist die dem Innenraum des Quaders abgewandte Seite des Rückwandprofils 32. Innenfläche ist die dem Innenraum des Quaders zugewandte Seite des Rückwandprofils 32.

In Figur 5 ist außerdem auf dem Seitenstreifen 40.2 ein Befestigungsprofil 41 angeordnet. Das Befestigungsprofil 41 dient der funktionalen Verbindung zwischen zwei Rückwandprofilen 32, sodass beispielsweise Sicherungshalter oder Kabelführungen sicher durch das Erweiterungsmodul 36 verlegt werden können.

Das Frontwandprofil 33 kann als eine öffnebare Klappe ausgeführt sein oder eine öffnebare Klappe umfassen. Das bedeutet, dass das Frontwandprofil 33 in irgendeiner Weise den Zugang zu dem Innenraum gewährleisten. Dazu kann das Frontwandprofil 33 beispielsweise in Form einer Einhängvorrichtung angebracht sein und auf einfache Weise ausgehängt werden. Es kann aber auch eine öffnebare Klappe umfassen. Dann ist das Frontwandprofil 33 fest mit den benachbarten Bauteilen verbunden und weist die öffnebare Klappe auf.

Auf dem hier gezeigten modularen Verteilerkasten Q kann ein nicht gezeigtes Deckelprofil zum Verschluss des oben offenen Quaders vorgesehen und entsprechend vorkonfektioniert werden. Alternativ ist es auch möglich einen weiteren modularen Verteilerkasten andererseits des Bodenprofils 31 anzuordnen und diesen dann ohne ein eigenes Bodenprofil 31 aufzusetzen und eine funktionale Verbindung zu ermöglichen.

Das Bodenprofil, welches in Figur 6 gut zu erkennen ist, weist außerdem nicht näher gezeigte und auch verschließbare oder öffnebare Kabeldurchlässe auf, sodass Stromkabel in den Innenraum des modularen Verteilerkastens hinein verlegt werden können.

Erfindungsgemäß wird eine Vorkonfektionierung des modularen Verteilerkastens Q durch Festlegung der Anzahl und Maße des Bodenprofils 31, des Rückwandprofils 32, des Frontwandprofils 33, der ersten Endwandung 34, der zweiten Endwandung 35 und des Erweiterungsmoduls 36 und der dazugehörigen Verbindungsstreben 37.1, 37.2 an einem Herstellungsort vorgenommen. Der Herstellungsort kann mit dem **Konfektionsort** zusammenfallen oder kann auch örtlich getrennt sein.

Die Länge der Verbindungsstreben 37.1, 37.2 richten sich im Wesentlichen nach der Länge des Rückwandprofils 32 oder des Frontwandprofils 33. Wobei durch die Vorkonfektionierung zusammen gehörige Frontwandprofile 33, Rückwandprofile 32 und Bodenprofile 31 im Wesentlichen identische Längen haben. Die Maße unterscheiden sich nur dadurch, wie welches Teil mit dem Erweiterungsmodul 36 oder eine der Endwandungen 34, 35 verbunden sind.

Anschließend wird der vorkonfektionierten modulare Verteilerkastens Q an einen Aufstellungsort in Einzelteilen versandt oder verbracht.

Am Aufstellungsort wird der modulare Verteilerkastens Q mittels Schraubverbindungen, Klemmverbindungen, Fügeverbindungen oder Einhängvorrichtungen an dem Aufstellungsort zusammengebaut und anschließend in Betrieb genommen.

Durch diese Vorgehen ist es möglich, dass teilweise sehr große modulare Verteilerkästen in Einzelteilen durch engen Treppenhäuser gebracht werden können oder, dass beim Transport unnötige Kosten vermieden werden.

**Bezugszeichenliste**

| | | | |
|---|---|---|---|
| 1 | erste Stirnplatte | 31 | Bodenprofil |
| 2 | erste Rückwand | 32 | Rückwandprofil |
| 3 | erste Vorderfestblende | 33 | Frontwandprofil |
| 4 | zweite Stirnplatte | 34 | erste Endwandung |
| 5 | erste Bodenstrebe | 35 | zweite Endwandung |
| 6 | Modular-Rahmen | 36 | Erweiterungsmodul |
| 7 | zweite Vorderfestblende | 37 | Verbindungsstrebe |
| 8 | zweite Rückwand | 38 | Bodenstreifen |
| 9 | zweite Bodenstrebe | 39 | Deckelstreifen |
| 10 | weiterer Modular-Rahmen | 40 | Seitenstreifen |
| 11 | erste Öffnungsblende | 41 | Befestigungsprofil |
| 12 | zweite Öffnungsblende | | |
| 13 | Kabelfangschiene | | |
| 14 | Kabelfangschiene | | |
| 15 | Haltebügel | | |
| 16 | Anschlag-Steg | | |
| 17 | Leerraumabstand | | |
| 18 | Bodenblech | | |
| 19 | Oberblech | | |
| 20 | Rückblech | | |
| 21 | Vorderblech | | |
| 22 | Anbringwinkel | | |
| | | | |
| | | | |
| | | | |
| | | | |
| | | | |
| | | | |
| | | | |
| | | | |
| P | Modularer Eingrabsockel | Q | Modularer Unterverteilerkasten |
| | | | |
| | | | |

## Patentansprüche

1. Modularer Eingrabsockel (P) für einen Verteilerkasten bestehend aus einer ersten Stirnplatte (1), wobei die erste Stirnplatte (1) eine erste Rückwand (2) und eine erste Vorderfestblende (3) aufweist, wobei die erste Rückwand (2) und die erste Vorderfestblende (3) einends mit der ersten Stirnplatte (1) verbunden sind, wobei eine zweite Stirnplatte (4) und ein Deckelelement oder einem aufsetzbaren Verteilerkasten vorhanden sind,
**dadurch gekennzeichnet, dass**
- andernends der ersten Stirnplatte (1) die erste Vorderfestblende (3) und die erste Rückwand (2) und eine erste Bodenstrebe (5) mit einen Modular-Rahmen (6) verbunden sind,
- wobei der Modular-Rahmen (6) in der Erstreckung der ersten Vorderfestblende (3) eine zweite Vorderfestblende (7, 7.1) aufweist und in der Erstreckung der ersten Rückwand (2) eine zweite Rückwand (8, 8.1) aufweist und in der Erstreckung der ersten Bodenstrebe (5) eine zweite Bodenstrebe (9, 9.1) aufweist,
- wobei die zweite Rückwand (8, 8.1) und die zweite Vorderfestblende (7, 7.1) und die zweite Bodenstrebe (9, 9.1) andererseits des Modular-Rahmens (6) mit einem weiteren Modular-Rahmen (10) oder der zweiten Stirnplatte (4) verbunden ist,
- wobei eine Höhe der Vorderfestblenden (3, 7, 7.1) geringer ist, als eine Höhe der Rückwände (2, 8, 8.1),
- wobei in einem Einbauzustand ein erster Leerraumabstand der Rückwände (2, 8, 8.1) zu der Bodenstrebe (5, 9, 9.1) identisch ist, wie ein zweiter Leerraumabstand der Vorderfestblenden (3, 7, 7.1) zu der Bodenstrebe (5, 9, 9.1),
- wobei zwischen der ersten Vorderfestblende (3) und dem Deckelelement oder dem aufsetzbaren Verteilerkasten eine erste Öffnungsblende (11) angeordnet ist und zwischen der zweiten Vorderfestblende (7, 7.1) und dem Deckelelement oder dem aufsetzbaren Verteilerkasten eine zweite Öffnungsblende (12, 12.1) angeordnet ist.

2. Modularer Eingrabsockel (P) nach Anspruch 1, **dadurch gekennzeichnet, dass** die Bodenstrebe (5, 9, 9.1) sich jeweils eckseitig in einem unteren Bereich der ersten Stirnplatte (1) in den zugeordneten Eckbereich des Modular-Rahmens (6) oder der zweiten Stirnplatte (4) erstreckt, geeignet, dass die Bodenstreben (5, 9, 9.1) die untere Eckkante einer Quaderform bilden.

3. Modularer Eingrabsockel (P) nach einem der Ansprüche 1 oder 2, **dadurch gekennzeichnet, dass** die Rückwände (2, 8, 8.1) jeweils eine Kabelfangschiene (13, 14, 14.1) aufweisen, wobei der Modular-Rahmen (6, 10) einen Haltebügel (15, 15.1) aufweist, an welchen die Kabelfangschienen (13, 14, 14.1) der ersten Rückwand (2) und der zweiten Rückwand (8, 8.1) angebracht und somit miteinander verbunden werden können.

4. Modularer Eingrabsockel (P) nach einem der vorigen Ansprüche, **dadurch gekennzeichnet, dass** zwischen den Rückwänden (2, 8, 8.1) und den Vorderfestblenden (3, 7, 7.1) ein Abstands-Stabilisierer anordenbar ist.

5. Modularer Eingrabsockel (P) nach einem der vorigen Ansprüche, **dadurch gekennzeichnet, dass** die Öffnungsblende (11, 12, 12.1) in eine Aufnahme reversibel einhängbar sind.

6. Modularer Eingrabsockel (P) nach einem der vorigen Ansprüche, **dadurch gekennzeichnet, dass** die erste Rückwand (2) und die erste Vorderfestblende (3) eine identische Länge aufweisen, und die zweite Rückwand (8, 8.1) und die zweite Vorderfestblende (7, 7.1) ebenfalls eine identische Länge aufweisen.

7. Modularer Eingrabsockel (P) nach einem der vorigen Ansprüche, **dadurch gekennzeichnet, dass** zwischen den Stirnwänden (1,4) und dem Modular-Rahmen (6, 10) je ein Anschlag-Steg (16) angeordnet ist.

8. Verwendung eines Modularen Eingrabsockels (P) nach den Ansprüchen 1 bis 7, **gekennzeichnet durch** folgende Schritte:
- Verbinden der ersten Stirnwand (1) mit der ersten Rückwand (2);
- Verbinden der zweiten Rückwand (2) mit dem ersten Modular-Rahmen (6);
- Anbringen der ersten Vorderfestblende (3) zwischen der ersten Stirnwand (1) und dem ersten Modular-Rahmen (6);
- Anbringen der zweiten Rückwand (8) und der zweiten Vorderfestblende (7) an dem ersten Modular-Rahmen (6);
- Anbringen der zweiten Stirnwand (4) an der zweiten Vorderfestblende (7) und der zweiten Rückwand (8);
- Anbringen der Bodenstreben (5, 9) sowie der Anschlag-Stege (16);
- Einsetzen des modularen Verteilerkastens in eine Baugrube;
- Auffüllen der Baugrube bis zu den Vorderfestblenden (3, 7, 7.1) und der Rückwände (2, 8, 8.1) mit Beton;
- Einsetzen der Öffnungsblenden (11, 12, 12.1) oberhalb der Vorderfestblenden (3, 7, 7.1);
- Aufsetzen des Deckelelementes oder eines Verteilerkastens.

9. Modularer Verteilerkasten (Q) bestehend aus einem Bodenprofil (31), einem Rückwandprofil (32), einem Frontwandprofil (33), einer ersten Endwandung (34) und einer zweiten Endwandung (35),
**dadurch gekennzeichnet, dass**
zwischen die erste Endwandung (34) und die zweite Endwandung (35) ein Erweiterungsmodul (36) anordenbar ist, wobei das Erweiterungsmodul (36) zwischen das eine Bodenprofil (31) und das eine Frontwandprofil (33) und das eine Rückwandprofil (32) und eine der Endwandungen (34, 35) anordenbar ist, wobei die beiden Endwandungen (34, 35) miteinander oder zumindest eine der Endwandungen (34, 35) mit dem Erweiterungsmodul (36) über Verbindungsstreben (37.1, 37.2) verbindbar ist/sind.

10. Modularer Verteilerkasten (Q) nach Anspruch 9, **dadurch gekennzeichnet, dass** das Erweiterungsmodul (36) zwischen zwei Bodenprofile (31) und zwei Rückwandprofile (32) und zwei Frontwandprofile (33) anordenbar ist.

11. Modularer Verteilerkasten (Q) nach einem der Ansprüche 9 oder 10, **dadurch gekennzeichnet, dass** das Erweiterungsmodul (36) einen Bodenstreifen (38), einen Deckelstreifen (39) und zwei Seitenstreifen (40.1, 40.2) aufweist.

12. Modularer Verteilerkasten (Q) nach einem der Ansprüche 9 bis 11, **dadurch gekennzeichnet, dass** an dem Rückwandprofil (32) an einer Aussenfläche eine Aufhängvorrichtung und an einer Innenfläche Kabelführungselemente und Sicherungshalter anordenbar sind.

13. Modularer Verteilerkasten (Q) nach einem der Ansprüche 10 bis 12, **dadurch gekennzeichnet, dass** das Frontwandprofil (33) eine öffnebare Klappe ist oder eine öffnebare Klappe umfasst.

14. Modularer Verteilerkasten (Q) nach den Ansprüchen 10 bis 13, **dadurch gekennzeichnet, dass** ein Deckelprofil oder ein weiterer modularer Verteilerkasten andererseits des Bodenprofils (31) anordnebar ist.

15. Verwendung des modularen Verteilerkastens (Q) nach den Ansprüchen 10 bis 14 **gekennzeichnet durch** folgende Schritte:
- Vorkonfektionierung des Verteilerkastens (Q) durch Festlegung der Anzahl und Maße des Bodenprofils (31), des Rückwandprofils (32), des Frontwandprofils (33), der ersten Endwandung (34), der zweiten Endwandung (35) und des Erweiterungsmoduls (36) und Verbindungsstreben (37.1, 37.2) an einem Herstellungsort,
- Versenden oder Verbringen des vorkonfektionierten Verteilerkastens (Q) an einen Aufstellungsort;
- Aufbau des modularen Verteilerkastens (Q) an dem Aufstellungsort;
- Inbetriebnahme des modularen Verteilerkastens (Q) an dem Aufstellungsort.
